# EUROPEAN PATENT APPLICATION

(11) **EP 1 935 995 A1**
(43) Date of publication of application: **25.06.2008**
(21) Application number: 06123162.7
(22) Date of filing: 30.10.2006
(51) Int. Cl.: C21D 1/10, C21D 9/42

(54) **Ballistic protection plate of titanium with layered properties**

(71) Applicant: SAAB AB, 581 88 Linköping (SE)
(72) Inventor: Jaensson, Bernt, 596 31, Skänninge (SE); Persson, Håkan, 614 33, Söderköping (SE); Samuelsson, Magnus, 633 49, Eskilstuna (SE)
(74) Representative: Winblad, Hans Peter

(57) **Abstract**

The present invention relates to a method for manufacturing a ballistic protection plate with layered properties comprising the steps of; induction hardening a first surface of the ballistic plate by exposing the first surface to an induced electro-magnetic current from an inductor; and cooling a second surface of the ballistic protection plate, the invention further discloses a ballistic protection plate manufactured according to the method.

## Description

### Field of the invention

The present invention relates to a method for manufacturing a ballistic protection plate. Specifically, the present invention relates to a method for manufacturing a ballistic protection plate with layered properties and a plate manufactured accordingly.

### Background of the invention

In order to obtain optimal energy absorption when a projectile penetrates a ballistic protection plate is it advantageous to have the breaking procedure to occur in several layers and especially if the breaking distribution/propagation is favoured in the layer perpendicular to the substantial direction of penetration. The condition for such a characteristic exists if a material is composed of two or more structures, wherein one is a softer structure and the other/s is/are of harder structure.

A comprehensive requirement for this type of application is low weight in relation to the protection ability and is often expressed in surface weight (kg/m²) for a certain threat.

Prior art discloses a number of methods to manufacture ballistic protection plates.

Document US, A, 5 980 655 discloses a method for producing titanium alloys with the same ballistic characteristics as previously known titanium alloys but in a more cost effective manner than the previously known alloys. The composition differs from the known Ti-6Al-4V-alloy and the method produces an alloy that is through-hardened.

The US-patent 6 360 936 discloses a method for manufacturing a composite sheet steel with ballistic properties. The material is a maraging type steel. The material obtains layered properties by producing an outer layer with different characteristics than an inner layer of the plate. This is done by a zone melting process.

Document US, A, 4 431 466 discloses a method for making an armour plate by heating, during tempering of the plate, the top side of a through-hardened metal plate while preventing a bottom side of the plate to reach a tempering temperature by lowering the plate into a liquid. The method relates to tempered steel plates.

A material that has great characteristics and is very suitable to use in a protection plate is titanium. Titanium has relatively low density and high strength characteristics. However, joining layers of titanium with layers of different material/metal is very complicated and such plates are hard to manufacture.

The objective of the invention is to provide a ballistic protection plate wherein the cracking/ breaking distribution is favoured perpendicularly to the penetration direction of a projectile, which plate has a comparatively low weight as well as high degree of protection. The term "perpendicularly to the penetration direction" means perpendicular to the normal of the surface of the plate facing the threat.

### Summary of the invention

The method of tempering steel plates by heating one side of a work piece and cooling the other side to obtain a homogenous steel plate with a tempered softer yet tougher side and a side that retains its hardness, does not work in a satisfactory way for titanium alloys, but renders a poor result with a plate with a low degree of protection. There is a need to provide a method for the manufacture of layered plates of titanium alloy obtaining a sharp gradient of hardness in the middle of the plate, which favours the cracking distribution perpendicular to the direction of penetration. Hence, the degree of protection is enhanced. In the present invention a heated surface gets a higher degree of hardness while in prior art the heated surface obtains tempered softer surface. It should be understood that the method mat also be employed on general metal plates, such as steel plates, and resulting in an enhanced ballistic plate.

An important advantage of the invention is that the weight of the plate is essentially reduced. According to tests a 15-20 % weight reduction is obtained as compared to a non-processed plate of titanium.

The present invention thus relates to a method for the manufacture of a ballistic protection plate according to claim 1 and a plate according to claim 10.

The present invention discloses a method for manufacturing a ballistic protection plate with layered properties comprising the steps of; induction hardening a first surface of the ballistic plate by exposing the first surface to an induced electro-magnetic current from an inductor and cooling a second surface of the ballistic protection plate.

Furthermore, the present invention discloses a method that further comprises the step of; quenching the first surface by means of an arrangement.

The present invention also discloses an embodiment of the method wherein the method further comprises the step of; tempering the ballistic plate after the induction hardening has been performed.

An embodiment of the present invention discloses that the hardening depth is controlled by controlling one or all parameters, the parameters being; an exposure time of the plate to the induced electro-magnetic current; the frequency of the induced electro magnetic current; the cooling effect of the first and second surface of the plate; and the energy density of the induced electromagnetic current.

In an embodiment of the invention the induced electro-magnetic current, in the hardening step, moves in relation to the plate to harden the entire first surface of the plate.

The ballistic protection plate used in the method may be a plate of titanium alloy, such as timetal 550, Ti-6A1-4V or the like.

In an embodiment of the invention the method results in that the first surface of the plate achieves a hardness of 440-500 HV3 and that the plate gets a hardness gradient of 100-200 HV3 in the middle of the plate.

Furthermore, the invention relates to a ballistic protection plate manufactured according to the above stated method.

Additionally, the present invention relates to an apparatus for manufacturing a ballistic protection plate, wherein the apparatus comprises an inductor element arranged to expose a first surface of the ballistic protection plate to an induced electro-magnetic field, and a first cooling arrangement arranged to cool a second surface of the protection plate.

In one embodiment of the apparatus, the inductor element is arranged to move in relation to the plate and the first cooling unit is arranged to move simultaneously with the inductor element.

Furthermore, an apparatus according to the invention may further comprise a second cooling arrangement arranged to cool the first surface.

Finally, the apparatus in one embodiment may comprise a second cooling arrangement that is arranged to trail the inductor element.

### Brief description of the drawings

The invention will be described in more detail below with reference to examples of embodiments and with reference to the attached drawings, of which
FIG. 1 discloses a schematic flow chart of the manufacturing of a ballistic protection plate;
FIG. 2 discloses a chart of hardness in an induction hardened plate plotted against the depth of the plate;
FIG. 3 discloses a crosscut section of a ballistic plate that has stopped a bullet from a AK4-rifle; and
FIG. 4 discloses a schematic overview of an apparatus performing the induction hardening.

### Detailed description of embodiments of the present invention

The present invention provides a method for manufacturing a ballistic protection plate embodied as single material plate comprising layers of different characteristics, which plate has a low weight and a high degree of protection.

The method for manufacturing the ballistic protection plate comprises a one sided induction heating with an adapted cooling of the titanium plate. Parameters that can be used to control the process are;
- energy density (Power)
- feed speed of the machine (Time)
- frequency of the electromagnetic field (Hertz)
- cooling effect

By induction hardening, the plate is heated by means of an inductor that forms an electromagnetic field. The penetration depth of the induction hardening is based on the time of heating (i.e. feed speed of the machine) as well as the frequency of an aggregate, an inductor. These parameters can both be controlled by a human operator of the machine manufacturing the ballistic plate.

The electromagnetic field induces a turbulent flow in the plate, which decreases exponentially by the distance from the surface of the heated material. This turbulent flow generates heat in the plate due to the resistivity of the material. Simultaneously to the heating of a first surface of the plate, the plate is cooled, preferably with water, on a second surface of the plate. Also the first surface of the plate is cooled/quenched, preferably with water, in subsequently to the induction heating. In one embodiment of the invention a water spraying arrangement is arranged so as to trail the inductor. It should also be noted that the different surfaces may be cooled with an alternative cooling medium, such as oil, air or the like.

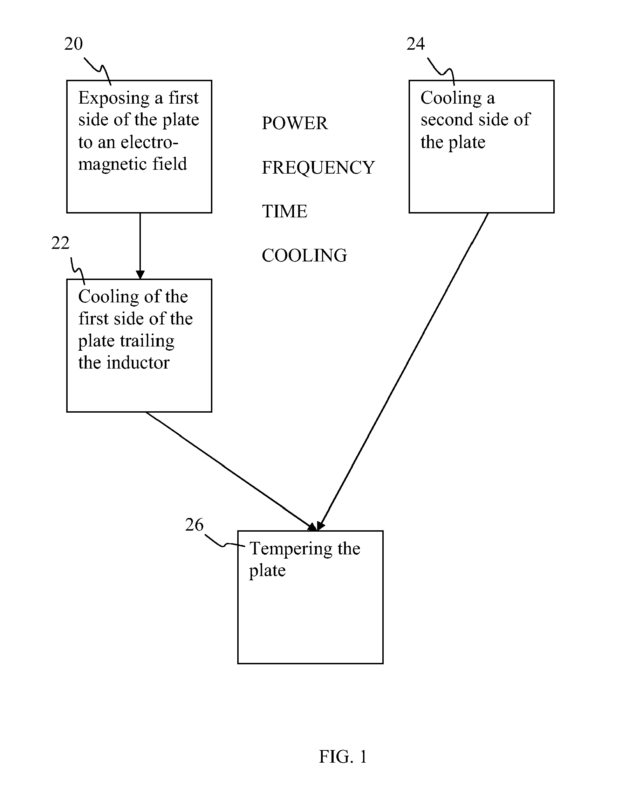

Referring to FIG.1, the method of manufacturing a plate of titanium according to the invention, of a titanium alloy such as Ti-6A1-4V, Timetal 550 or the like, with layered properties will be described. It should here be noted that other plates of metal, such as steel alloys or the like, may be used. However, the illustrated example is made on a titanium plate, wherein the result was very satisfactorily. In step 20, the plate is exposed to an electro-magnetic field which produces a heating effect in the surface of the plate, known as the phenomenon induction. This surface heating produced by the induced electro-magnetic current in the plate hardens the plate. The induction is performed by a copper induction coil arranged at the first side of the plate and the surface temperature is raised to above the upper critical temperature, in the illustrated example 1090 degree C, in a few seconds. For most applications high current frequencies of 200 kHz or above are used, or alternatively medium frequencies of up to 10kHz. In step 22 in FIG. 1, a quenching spray of a suitable solution, such as water or the like, follows the inductor as it traverses the plate, providing rapid cooling to achieve the full hardening transformation of the heated zone.

In one embodiment of the invention the plate can be traversed, with long shafts, so that the area to be hardened is progressively heated and quenched by a moving induction coil followed by a quench ring. Surface hardness depends upon the titanium alloy used. Induction hardening is a clean, controllable, rapid process which is very energy efficient and is readily automated.

Simultaneously, as stated in step 24, a cooling or quenching of a second side, opposite to the first side, is performed in order to obtain a plate the layered characteristics. In one embodiment of the invention the cooling is performed by a spraying arrangement of a suitable solution, such as water or the like, arranged in connection with the inductor to follow the inductor along the plate. In another embodiment of the invention the second side of the plate is exposed to continuous cooling by e.g. a stationary spraying arrangement that covers the whole surface of the second side of the plate, a bath of a suitable solution or the like.

The machine and hardening parameters are advantageously controlled continuously. Hardness and crack detecting machines can be integrated into the hardening installation.

In order to increase the ductility and thereby strengthen the plate, the plate may be tempered; by heating the whole plate to a tempering temperature, as shown in step 26. The tempering may also be performed on one side of the plate in order to increase the ductility of just that one side.

It should be understood that it is possible to repeat the above described method numerous times with different settings, such as feed speed, frequency of the inductor, cooling effect, energy density of the electro-magnetic field etc, as well as exposing both surfaces to a induced electro-magnetic current in sequential order to obtain a plurality of gradients of hardness in the material.

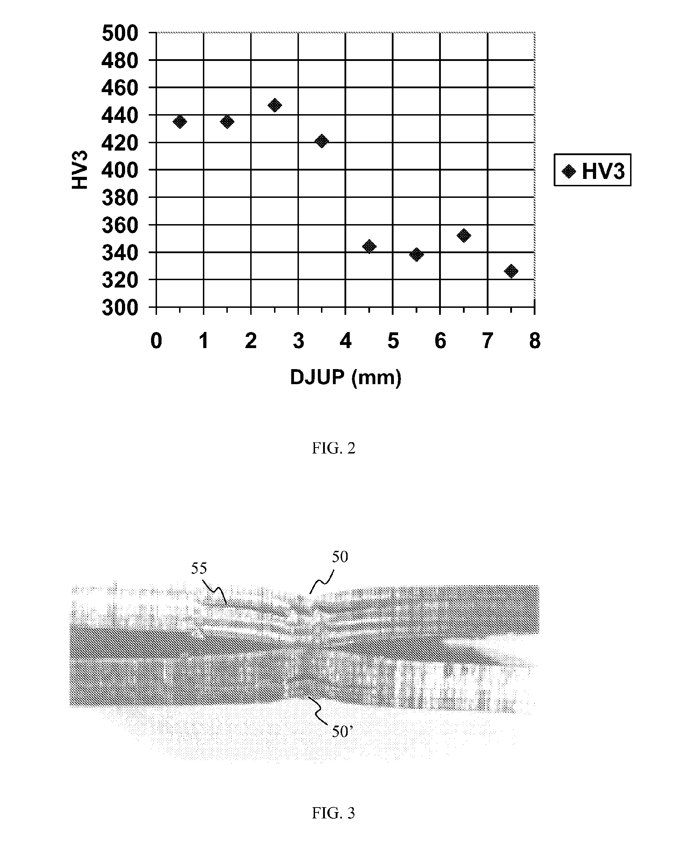

A measurement of the hardness profile of a tested highly alloyed titanium plate, timetal 550, with a thickness of 8 mm showed a clear gradient of hardness in the middle of the induction hardened plate as can be seen in FIG. 2. In the illustrated example the hardness differs from 440 HV3 at the surface of the plate to 340 HV3 in the middle (4 mm depth). Consequently, a hardness gradient of 100 HV3 is achieved in the plate of the shown example. The load used in the hardness test was 3 kp.

Referring to FIG. 3, a test shooting was performed on an induction hardened plate according to one embodiment of the invention by firing an Ak4 with 7,62 mm ammunition (with a muzzle velocity of 780 m/s) at the plate, the plate used is the one describe din reference to FIG. 2. There is no penetration in the plate. A bullet 50 is maintained at the surface, and according to what the cross section of the plate reveals, as can be seen in FIG. 3, the cracking distribution 55 in the plate is clearly perpendicular to the projectile/penetration direction. In FIG. 3 the plate has been cut into two pieces along an impact point of the bullet, dividing the bullet 50 into two pieces 50, 50', the plate has then been folded along the cut and the back surface of the plate is laid against each other back to back, i.e. the surface that faced the bullet is both the top side and the down side in the illustrated example. Cracking distribution perpendicular to the normal of the plate surface is desired because this type of cracking more efficiently stops an incoming threat.

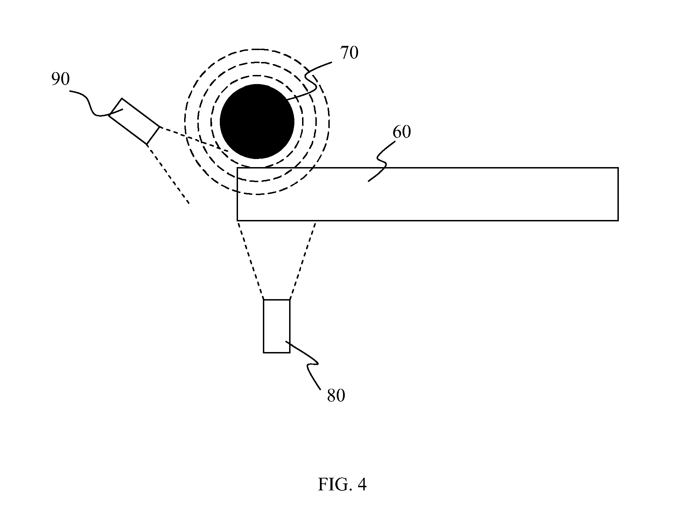

FIG. 4 shows a schematic overview of an apparatus for manufacturing a ballistic protection plate 60 with layered properties. The apparatus comprises an inductor 70, which may be a coil of copper that generates an induced electro-magnetic current (shown as dashed lines surrounding the inductor 70), arranged such that a first surface of the plate 60 falls within the induced electromagnetic field. This induced electromagnetic field renders a temperature at the surface that may vary preferably between 800-1200 deg C. The apparatus further comprises a cooling arrangement 80 arranged to cool the opposite surface, a second surface, of the plate 60 and thereby obtaining a ballistic protection plate with layered properties. The cooling arrangement 80 may be a water hose spraying water of ambient temperature at the plate. Furthermore, a quenching arrangement 90 is provided trailing the inductor 70 to quench the first surface in order to form the hard microstructure. The cooling/quenching medium used may be water, oil, air or the like. The quenching arrangement 90 may as well be a water hose spraying water at ambient temperature on the hardening side. The flow of cooling medium may vary between the cooling arrangements 80 and the quenching arrangement 90 but may as well be the same. The temperatures of the cooling medium as well as the quenching medium may vary preferably in the interval of 1-30 deg C when using water, but may be even lower when using a different medium with a much lower freezing point.

In one embodiment, the inductor 70, the cooling arrangement 80 and the quenching arrangement 90 are formed as a movable unit, which is moveable along the plate 60. In another embodiment the unit is fixed, and the plate is moveable relative to the fixed unit. Naturally, the different parts may be separated as stand alone units. As an example, the cooling arrangement may be stationary arranged, cooling an entire surface of the plate while the hardening elements 70, 90 are movable along the plate. In an alternative embodiment the entire arrangement is stationary, heating and cooling the whole surface.

In another embodiment of the invention, the cooling and quenching arrangements are integrated into one unit, the cooling medium is supplied to the unit from one source, e.g. a water hose, and differently shaped nozzles are directed towards the first side, as well as the second side of the plate, which nozzles also control the flow towards the plate, rendering a less complex construction. By providing different predetermined units with cooling and quenching effects one can have predetermined effects based on the nozzles or internally shaped channels to control the flow in the unit, e.g. a bigger nozzle on the quenching side than on the cooling side.

An embodied process using a Ti550 plate with a thickness of 8 mm will now be described. A Ti550 plate is arranged in an induction hardening apparatus 3-4mm from the inductor of the apparatus, which inductor is a coil having a width of 10mm. The distance between the coil and the surface of the plate affects the temperature and hence the hardening depth. Another parameter that controls the temperature is the power of the apparatus and in the embodied process the machine is running on 15 kW. These settings result in a temperature at the surface of the titanium plate of 1090°C. The opposite side, the second side, of the Ti550 plate is continuously cooled with water at ambient temperature and the first side of the Ti550 plate is quenched with water at ambient temperature.

The hardening arrangement, i.e. the coil, travels in relation to the plate at a speed of 2 mm/s, which renders a holding time of 5 s when the coil has a width of 10mm. The hardening depth is also affected by the frequency of the machine, in this example the apparatus is running with a frequency of 34 kHz.

The resulting plate showed a hardness at the surface of 490 HV with a hardness gradient in the plate of 170 HV. The hardening depth of the plate was 3 mm.

The present invention provides a method for manufacturing a ballistic protection plate embodied as single material plate comprising layers of different characteristics, which plate has a low weight and a high degree of protection. The low weight depends essentially on the choice of material. Furthermore, the layered solution according to the invention does provide a method that does not need to join further plates together, providing an effective and less expensive manufacturing method.

The foregoing has described the principles, preferred embodiments and modes of operation of the present invention. However, the invention should be regarded as illustrative rather than restrictive, and not as being limited to the particular embodiments discussed above. It should therefore be appreciated that variations may be made in those embodiments by those skilled in the art without departing from the scope of the present invention as defined by the following claims.

## Claims

1. A method for manufacturing a ballistic protection plate with layered properties comprising the steps of;
- induction hardening a first surface of the ballistic plate by exposing the first surface to an induced electro-magnetic field from an inductor; and
- cooling a second surface of the ballistic protection plate using a first cooling arrangement.

2. The method according to claim 1, wherein the method further comprises the step of;
- quenching the first surface by means of an second cooling arrangement.

3. The method according to any of claims 1-2, wherein the method further comprises the step;
- tempering the ballistic plate after the induction hardening has been performed.

4. The method according to any of claims 1-3; wherein the method further comprises the step of;
- controlling the hardening depth by controlling one or all parameters, the parameters being; an exposure time of the plate to the induced electro-magnetic current; the frequency of the induced electro magnetic current; the cooling effect of the first and second surface of the plate; and the energy density of the induced electromagnetic current.

5. The method according to any of claims 1-4, wherein the induced electro-magnetic field, in the induction hardening step, moves in relation to the plate in order to harden the entire first surface of the plate.

6. The method according to any one of claims 1-5, wherein the plate is a plate of a titanium alloy, such as Ti-6A1-4V, Timetal 550 or the like.

7. The method according to any one of claims 1-6, wherein the method results in that the first surface of the plate achieves a hardness of 440-500 HV3 and that the plate gets a hardness gradient of 100-200 HV3 to the middle of the plate.

8. A ballistic protection plate manufactured according to the method in any one of claims 1-7.

9. An apparatus for manufacturing a ballistic protection plate (60) **characterized in that** the apparatus comprises an inductor element (70) arranged to expose a first surface of the ballistic protection plate (60) to an induced electro-magnetic field, and a first cooling arrangement (80) arranged to cool a second surface of the protection plate.

10. An apparatus according to claim 10, wherein the inductor element is arranged to move in relation to the plate and the first cooling unit is arranged to move simultaneously with the inductor element.

11. An apparatus according to any one of the claims 9-10, wherein the apparatus further comprises a second cooling arrangement arranged to cool the first surface.

12. An apparatus according to claim 11, wherein the second cooling arrangement is arranged to trail the inductor element.
